# FASCICULE DE BREVET EUROPEEN

(11) **EP 3 720 734 B1**
(45) Date de publication et mention de la délivrance du brevet: **02.02.2022**
(21) Numéro de dépôt: 18811831.9
(22) Date de dépôt: 03.12.2018
(51) Int. Cl.: B60N 2/08, B60N 2/60, B60R 7/04

(54) **VÉHICULE AUTOMOBILE AVEC UN SIÈGE AVEC ACCÈS À UN COUPE-BATTERIE**
KRAFTFAHRZEUG MIT SITZ MIT ZUGANG ZU EINEM BATTERIEHAUPTSCHALTER
MOTOR VEHICLE WITH SEAT WITH ACCESS TO A BATTERY MAIN SWITCH

(30) Priorité: 06.12.2017 FR 1761693
(43) Date de publication de la demande: 14.10.2020
(73) Titulaire: Renault S.A.S., 92100 Boulogne-Billancourt (FR)
(72) Inventeur: CHHEANG, Nakry, 78470 Saint Rémy les Chevreuses (FR); CHO, Ara, 78000 VERSAILLES (FR); ASSUNCAO, Joao, 92370 CHAVILLE (FR)
(86) Numéro de dépôt international: PCT/EP2018/083339
(87) Numéro de publication internationale: WO 2019/110500

(56) Documents cités:
- WO-A1-2012/021492
- FR-A1- 2 992 264
- US-A1- 2015 084 360

## Description

### DOMAINE TECHNIQUE AUQUEL SE RAPPORTE L'INVENTION

La présente invention concerne de manière générale la sécurité électrique des véhicules automobiles.

Elle concerne plus particulièrement un véhicule automobile avec un siège, le siège comportant :
- un dossier,
- une assise qui comprend une ossature recouverte d'une housse dans laquelle est prévue une encoche, et
- un capot comprenant une paroi frontale adaptée à fermer ladite encoche et des moyens de fixation adaptés à se fixer à l'assise.

Il peut notamment s'agir d'un véhicule hybride ou d'un véhicule électrique.

### ARRIERE-PLAN TECHNOLOGIQUE

Les véhicules automobiles hybrides ou électriques comportent des batteries d'accumulateurs de grandes capacités, qui sont aptes à fournir de très grosses quantités d'énergie électrique au moteur de traction du véhicule afin de pouvoir propulser ce dernier.

On comprend alors que toute intervention sur le circuit électrique du véhicule doit être pratiquée avec attention, afin d'éviter tout accident électrique grave.

Les raisons de telles interventions peuvent être variées. Ces interventions peuvent par exemple être liées à un problème de batterie (fuite, dysfonctionnement...) ou à un problème affectant le véhicule dans son ensemble (incendie, accident de circulation, immersion du véhicule...).

Toute intervention sur le terrain (par des services de secours) et en atelier (par des réparateurs agréés) doit alors systématiquement commencer par une opération de coupure du courant électrique, en agissant sur la poignée d'un interrupteur dédié.

Il est connu de placer cet interrupteur dans le compartiment moteur, c'est-à-dire sous le capot du véhicule.

On comprend toutefois qu'en cas d'accident, la déformation du capot du véhicule et du compartiment moteur risque de rendre l'accès à cet interrupteur au moins délicat voire impossible. FR 2992264 A1 montre un véhicule comportant un siège avec un dossier et une assise qui comprend une ossature dans laquelle est prévue une encoche, et un capot comprenant une paroi frontale adaptée à fermer ladite encoche et des moyens de fixation adaptés à se fixer à l'assise, l'ossature de l'assise comportant un élément de blocage, l'élément délimitant au moins un orifice.

### OBJET DE L'INVENTION

Afin de remédier à l'inconvénient précité de l'état de la technique, la présente invention propose un véhicule automobile avec un siège sous lequel il est possible d'implanter un tel interrupteur.

Plus particulièrement, on propose selon l'invention un véhicule automobile avec un siège tel que défini dans l'introduction, dans lequel l'ossature de l'assise comporte un élément de blocage qui présente au moins un orifice, et dans lequel les moyens de fixation du capot comportent au moins une patte d'encliquetage adaptée à s'engager au travers dudit orifice de façon à s'accrocher audit élément de blocage.

Grâce à l'invention, l'organe de coupure, dont on rappelle qu'il est conçu pour isoler électriquement la batterie d'accumulateurs, peut être implanté dans l'habitacle du véhicule, notamment au centre du véhicule, sous l'assise du siège arrière central.

Ceci permet alors au réparateur ou au service de secours de trouver facilement cet organe de coupure et d'y accéder sans difficulté, quand bien même le véhicule aurait subi un accident, notamment un choc frontal ou un choc arrière (ce qui constitue la grande majorité des accidents).

Cette position de l'organe de coupure permet en outre d'éviter de perdre de l'espace d'habitabilité dans le véhicule et d'encombrer inutilement le compartiment moteur.

On notera par ailleurs que le capot prévu sous l'assise du siège permet de protéger l'organe de coupure. Il permet en outre d'empêcher à des enfants d'y accéder.

Ses moyens de fixation, par encliquetage, permettent toutefois à un technicien d'accéder à l'organe de coupure en retirant le capot.

On peut de préférence prévoir que ces moyens de fixation empêchent tout démontage du capot sans outil, sauf à casser le capot (ce qui nécessite un effort qu'un enfant ne peut pas fournir). Ainsi, les services de secours pourront accéder à l'organe de coupure en cassant les moyens de fixation du capot, et les réparateurs agréés pourront accéder à l'organe de coupure en retirant le capot avec un outil adapté.

D'autres caractéristiques avantageuses et non limitatives du siège conforme à l'invention sont les suivantes :
- ladite patte d'encliquetage présente un retour qui s'accroche au bord dudit orifice par une face qui est orthogonale à l'axe d'insertion de la patte d'encliquetage au travers dudit orifice, à 10 degrés près ;
- la paroi frontale du capot présente au moins une ouverture de passage pour un outil de démontage du capot, qui débouche vers ladite patte d'encliquetage;
- le capot comporte deux pattes d'encliquetage réparties selon un premier axe ;
- le capot comporte au moins un crochet qui est situé à distance dudit premier axe et qui est adapté à coopérer avec l'ossature de façon à former une charnière pour le capot ;
- ledit élément de blocage comporte une tige qui est fixée par ses deux extrémités au reste de l'ossature de l'assise ;
- ledit élément de blocage comporte au moins une plaquette qui délimite ledit orifice et qui est fixée à ladite tige ;
- ladite tige est pliée de façon à former au moins un décroché en U dont le fond est adapté à coopérer avec le crochet pour former ladite charnière ;
- l'ossature de l'assise comporte des rails mobiles adaptés à coulisser dans des rails fixes, des moyens de blocage du coulissement des rails mobiles dans les rails fixes, et un moyen de manœuvre manuelle (appelé « palonnier) adapté à manœuvrer les moyens de blocage pour libérer le coulissement des rails mobiles dans les rails fixes ;
- la paroi frontale du capot comporte au moins une encoche pour le passage du moyen de manœuvre ;
- la housse de l'assise présente une face supérieure d'accueil de plusieurs passagers, une face arrière située du côté du dossier, et une face avant opposée ;
- l'encoche est située en creux dans le bord inférieur de la face avant de la housse, au milieu de ce bord inférieur, et s'étend sur une partie seulement de l'épaisseur de l'assise ;
- le capot est moulé en matière plastique.

L'invention concerne aussi un véhicule automobile comportant :
- un moteur électrique de traction alimenté en courant par une batterie d'accumulateurs via un réseau électrique qui comporte un organe de coupure adapté à isoler électriquement la batterie d'accumulateurs du moteur électrique, et
- un siège tel que précité qui est positionné au-dessus de l'organe de coupure de façon à n'être accessible que lorsque le capot est démonté de l'ossature de l'assise du siège.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'une banquette conforme à l'invention, vue par l'avant ;
- la figure 2 est une vue schématique d'une partie de la banquette de la figure 1, sur laquelle la housse de la banquette n'a pas été représentée et sur laquelle apparaît un organe de coupure du courant électrique ;
- la figure 3 est une vue schématique en perspective d'un capot de la banquette de la figure 1, vu par l'arrière ;
- la figure 4 est une vue de détail de la zone IV de la figure 1 ;
- la figure 5 est une vue en coupe d'une partie avant de la banquette de la figure 1 ; et
- la figure 6 est une vue de détail de la zone VI de la figure 5.

L'invention porte de manière générale sur l'un quelconque des sièges d'un véhicule automobile.

Dans la description, les termes « avant » et « arrière » seront utilisés par rapport à ce véhicule automobile, l'avant d'un élément désignant le côté de cet élément qui est tourné vers le compartiment moteur du véhicule et l'arrière désignant le côté de cet élément qui est tourné vers le coffre.

De la même manière, les termes « inférieur » (ou « bas ») et « supérieur » (ou « haut ») seront utilisés par rapport à ce véhicule automobile, la partie inférieure d'un élément désignant la partie de cet élément qui est située du côté du plancher du véhicule et la partie supérieure désignant la partie de cet élément qui est située du côté du plafond.

De manière classique, un véhicule automobile comporte un châssis qui comprend notamment un plancher, deux ailes latérales et un toit, lesquels délimitent ensemble un habitacle. Un tel véhicule automobile comporte également au moins un siège conducteur fixé au plancher.

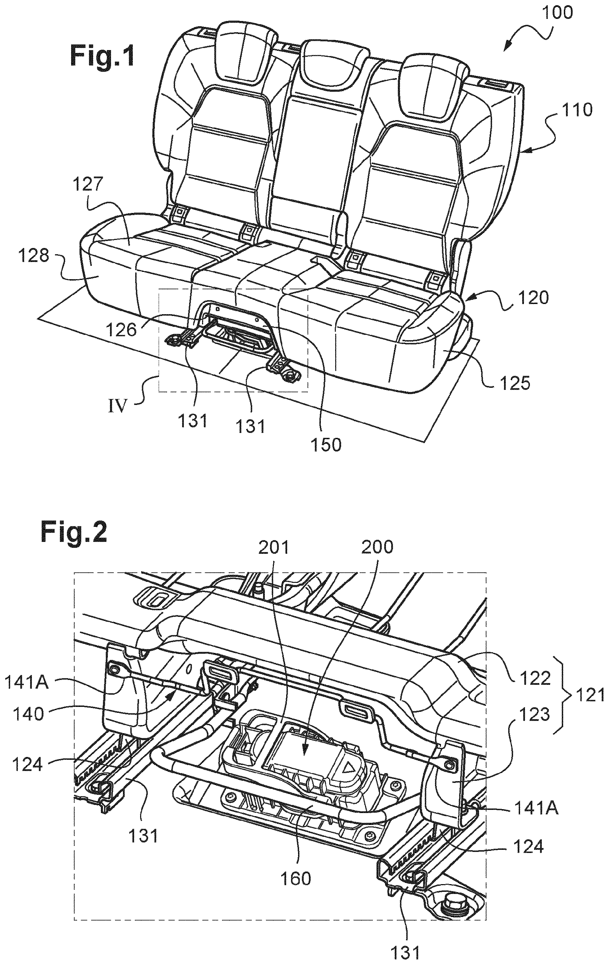

On considérera ici que le véhicule comporte deux sièges avant et un siège multiplace arrière qui est représenté sur la figure 1 et qui sera appelé ci-après « banquette 100 ».

Comme le montre cette figure 1, la banquette 100 comporte une assise 120 et un dossier 110, qui délimitent ici deux places assises. En variante, la banquette pourrait délimiter davantage de places assises.

De manière classique, l'assise 120 et le dossier 100 comportent chacun une armature métallique rigide, recouverte d'une housse 125 dans laquelle est intégrée une garniture pour le confort des passagers.

Dans la suite de cet exposé, on s'intéressera plus particulièrement à l'assise 120.

Comme le montre partiellement la figure 2, l'armature métallique 121 de l'assise 120 comprend une structure tubulaire 122 qui supporte la garniture et la housse 125, et deux flasques 123 latéraux qui permettent de monter la banquette 100 sur le châssis du véhicule.

De manière classique, les flasques 123 se présentent globalement sous la forme de deux parois parallèles, allongées selon l'axe du véhicule, qui portent chacun sur leurs bords inférieurs un rail mobile 124.

Comme le montre la figure 2, les deux rails mobiles 124 sont prévus pour être montés coulissants dans deux rails fixes 131 vissés sur le châssis du véhicule, de manière que la banquette 100 puisse avancer ou reculer dans l'habitacle. Des moyens de blocage se présentant sous la forme de crans permettent de bloquer ce coulissement.

On observe à ce sujet sur les figures 1 et 2 une tige en forme de U, appelée palonnier 160, qui permet de déverrouiller ces crans afin de libérer momentanément la mobilité de coulissement. Ce palonnier 160 s'étend sous la banquette 100, au centre du bord inférieur de la face avant de l'assise 120, entre les deux rails fixes 131.

Comme le montre bien la figure 1, la housse 125 est prévue pour recouvrir par sa face supérieure 127 l'ensemble du dessus de l'armature métallique 121 de l'assise 120, et elle descend le long des bords de cette armature métallique 121 de façon à conférer à l'assise 120 une épaisseur importante et à cacher l'ensemble de la structure de l'assise 100.

Le véhicule automobile ici considéré est un véhicule électrique ou hybride. Il comporte donc un moteur électrique de traction permettant d'entraîner en rotation les roues motrices du véhicule. Il comporte également une batterie d'accumulateurs pour alimenter ce moteur de traction en courant électrique.

Un réseau électrique câblé permet de connecter cette batterie d'accumulateurs au moteur de traction.

Pour permettre d'isoler électriquement la batterie d'accumulateurs du moteur de traction lors d'une intervention quelconque sur le véhicule, il est prévu un organe de coupure 200 à commande manuelle, visible sur la figure 2. Cet organe de coupure 200 est ici un coupe-batterie équipé d'une poignée de commande 201 pouvant pivoter entre deux positions, à savoir une position ouverte dans laquelle la batterie d'accumulateurs est isolée électriquement, et une position fermée dans laquelle la batterie d'accumulateurs est susceptible d'alimenter en courant le moteur de traction.

De façon à garantir un accès aisé à cette poignée de commande 201 en toute situation, le coupe-batterie 200 est ici placé sous la banquette 100, à proximité du centre de celle-ci.

L'invention propose alors une banquette 100 :
- permettant à un technicien d'avoir accès à cette poignée de commande 201 sans détériorer la banquette 100, à l'aide d'un outil,
- permettant à un agent de sécurité d'avoir accès à cette poignée de commande 201 sans outil, en détériorant manuellement une partie de la banquette 100, et
- permettant d'éviter qu'un enfant puisse accéder à cette poignée de commande 201.

Pour cela, l'assise 120 présente une encoche 126 en creux dans le bord inférieur de la face avant de sa housse 125 (voir figure 1), qui s'étend sur une partie seulement de l'épaisseur de l'assise 120, et qui est fermée par un capot 150 amovible.

Ce capot 150 permet de protéger la poignée de commande 201 tant qu'il est refermé sur l'encoche 126. Une fois extrait de l'assise 120, ce capot 150 est prévu pour laisser accès à la poignée de commande 201.

Comme le montre bien la figure 1, l'encoche 126 est plus précisément réalisée dans la housse 125 de l'assise 120, au centre du bord inférieur de sa face avant 128, c'est-à-dire au-dessus du palonnier 160. Elle présente une forme globalement rectangulaire.

Elle s'étend en hauteur depuis le bord inférieur de la face avant 128 de la housse 125 de l'assise 120, jusqu'à hauteur de la structure tubulaire 122 de cette assise 120.

On remarquera à ce sujet sur la figure 2 que la structure tubulaire 122 pourra à cet endroit être légèrement courbée vers le haut, de façon à libérer un espace plus grand pour accéder à la poignée de commande 201.

Le capot 150 comporte pour sa part une paroi frontale 151 permettant de fermer entièrement l'encoche 126. Pour cela, cette paroi frontale 151 présente une forme de plaque sensiblement rectangulaire, au contour tel que la paroi frontale 151 épouse la forme de l'encoche 126.

Ici, cette paroi frontale 151 présente un bord supérieur et deux bords latéraux sensiblement plats, mais elle est incurvée vers l'arrière en partie centrale-basse.

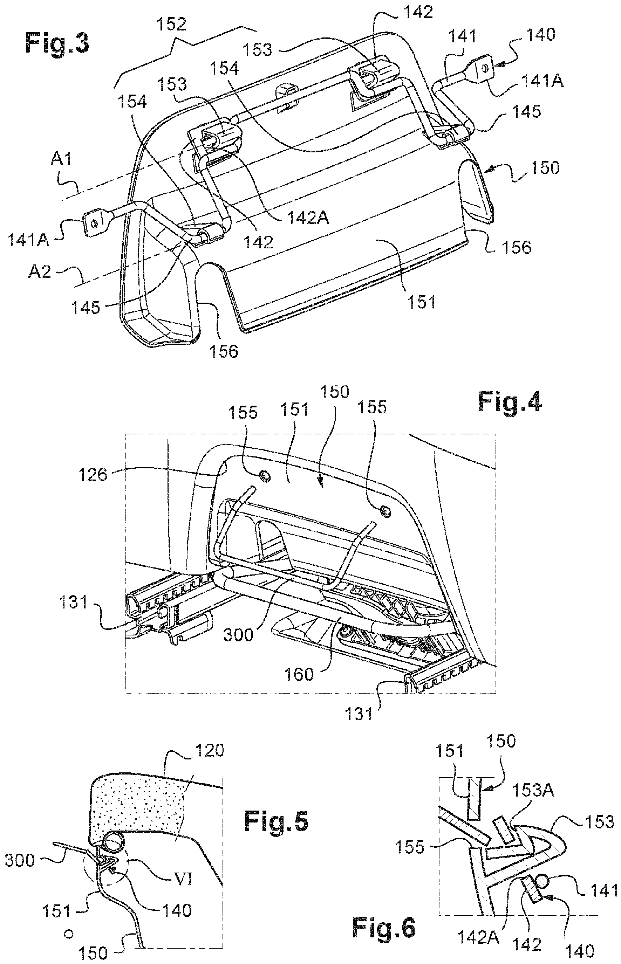

Cette paroi frontale 151 présente ici deux encoches 156 en creux dans son bord inférieur, de forme allongée. Comme le montre la figure 4, ces deux encoches 156 permettent de laisser passager les deux bras de la tige en U formant le palonnier 160. Elles sont allongées vers le haut de façon à ce que le capot 150 ne fasse pas obstacle au palonnier 160 lorsque ce dernier est tiré vers le haut pour libérer le coulissement des rails mobiles 124 dans les rails fixes 131.

Pour sa mise en place et son maintien sur l'assise 120, le capot 150 comporte des moyens de fixation 152 s'étendant en saillie de la face arrière de sa paroi frontale 151.

Ces moyens de fixation 152 sont ici prévus pour s'accrocher tous à un même élément de l'ossature métallique 121 de l'assise 120.

Comme le montrent bien les figures 2 et 3, cet élément (ci-après appelé « élément de blocage 140 ») comporte tout d'abord une tige 141 qui est fixée par ses deux extrémités 141A au deux flancs 123 de l'ossature métallique 121 de l'assise 120.

Les extrémités 141A de cette tige 141 sont à cet effet aplaties et percées de façon à pouvoir être rivetées sur ces flancs 123.

Cette tige 141 est cintrée vers le haut de façon à suivre globalement la forme de la structure tubulaire 122 et à libérer un espace plus grand pour accéder à la poignée de commande 201.

Elle est réalisée dans un matériau rigide, ici dans une tige d'acier de six millimètres de diamètre.

L'élément de blocage 140 comporte par ailleurs ici deux plaquettes 142 rectangulaires qui sont soudées à la tige 141 et qui délimitent chacune un orifice 142A rectangulaire.

Selon l'invention, les moyens de fixation 152 du capot 150 sur cet élément de blocage 140 comportent alors au moins une patte d'encliquetage 153 adaptée à s'engager au travers de l'orifice 142A de l'une des plaquettes 142.

En pratique, ces moyens de fixation 152 comportent plus exactement deux pattes d'encliquetage 153 adaptée à s'engager respectivement au travers des orifices 142A des deux plaquettes 142, et deux crochets 154.

Comme le montre la figure 3, les deux crochets 154 sont identiques et s'étendent en saillie de la face arrière de la paroi frontale 151 du capot 150, à mi-hauteur de celle-ci, vers l'arrière.

Les extrémités libres de ces deux crochets 154 sont recourbées vers le bas, de façon à ce que leurs faces inférieures présentent des formes de demi-cylindres de même axe A2.

La tige 141 de l'élément de blocage est pliée de façon correspondante. Elle présente ainsi, à proximité de ses extrémités, deux décrochés en U formant des sortes de manetons dont les fonds 145 sont en appui contre les faces inférieures semi-cylindriques des extrémités libres des crochets 154.

Les fonds 145 des manetons de la tige 141 forment donc avec les crochets 154 une sorte de charnière permettant au capot 150 de pivoter autour de l'axe A2.

Les pattes d'encliquetage 153, qui sont bien visibles sur les figures 3, 5 et 6, sont alors prévues pour s'encliqueter dans les orifices 142A des plaquettes 142 de l'élément de blocage 140 à la faveur du pivotement du capot 150 autour de l'axe A2.

Ces pattes d'encliquetage 153 sont identiques et s'étendent en saillie de la face arrière de la paroi frontale 151 du capot 150, à proximité du bord supérieur de celle-ci, vers l'arrière. Elles s'étendent plus précisément au niveau des plaquettes 142 de l'élément de blocage 140 lorsque les crochets 154 s'appuient sur la tige 141 de l'élément de blocage 140.

Les deux pattes d'encliquetage 153 sont situées sur un même axe A1, parallèle à l'axe A2 et distinct de celui-ci.

Chaque patte d'encliquetage 153 présente une forme de lamelle repliée en forme de « 1 ». Plus précisément, chaque patte d'encliquetage 153 comporte :
- une première partie qui s'étend à partir de la face arrière de la paroi frontale 151 du capot 150, dans une direction d'engagement qui est orthogonale au plan des plaquettes 142 et qui est orthoradiale par rapport à l'axe A2, et
- une seconde qui prolonge la première partie, qui est repliée vers le haut puis vers l'avant, avec un angle d'environ 150 degrés par rapport à la première partie, cette seconde partie présentant un retour vers le bas qui délimite une face de butée 153A s'étendant dans un plan parallèle au plan des plaquettes 142.

L'extrémité de cette seconde partie est libre si bien que lorsque la patte d'encliquetage 153 est engagée dans l'orifice 142A de la plaquette 142 correspondante, elle s'écrase contre la première partie jusqu'à ce que le retour passe derrière la plaquette 142. Dans cette position, la face de butée 153A de la patte d'encliquetage 153 s'accroche de manière indémontable (sans outil) à la face arrière de la plaquette 142.

La seule solution pour retirer sans outil le capot 150 de l'élément de blocage 140 consiste alors à exercer un effort de traction tel sur le capot 150 que les pattes d'encliquetage cèdent et se brisent.

Pour permettre le démontage du capot 150 avec un outil adapté, la paroi frontale 151 du capot 150 présente deux ouvertures de passage 155 visibles sur la figure 4.

Ces deux ouvertures de passage 155 sont situées au droit des extrémités libres des pattes d'encliquetage 153.

Ainsi, lorsqu'un outil tel qu'un tournevis (ou un fil métallique 300 comme cela est représenté sur la figure 4) est engagé au travers d'une des ouvertures de passage 155, il débouche vers l'extrémité libre de la seconde partie de la patte d'encliquetage 153 (voir figure 6). Il peut ainsi appuyer sur cette dernière de façon à ce que le retour se décroche de la plaquette 142, ce qui libère la patte d'encliquetage et permet d'extraire le capot 150 de l'encoche 126.

Ici, pour des raisons de coûts de fabrication et de poids, le capot 150 est moulé d'une seule pièce en matière plastique.

En variante, il pourrait être réalisé en matière métallique ou composite.

Sa paroi frontale 151 pourrait en outre être recouverte d'une couche esthétique, par exemple d'un tissu de matière et de couleur identiques à celles de la housse de l'assise 120.

## Revendications

1. Véhicule automobile comportant un moteur électrique de traction, alimenté en courant par une batterie d'accumulateurs via un réseau électrique qui comporte un organe de coupure (200) adapté à isoler électriquement la batterie d'accumulateurs du moteur électrique, le véhicule comportant un siège (100) comportant :
- un dossier (110),
- une assise (120) qui comprend une ossature (121) qui est recouverte d'une housse (125) dans laquelle est prévue une encoche (126) et qui comporte un élément de blocage (140) qui délimite au moins un orifice (142A), et
- un capot (150) comprenant une paroi frontale (151) adaptée à fermer ladite encoche (126) et des moyens de fixation (152) qui sont adaptés à se fixer à l'assise (120), le véhicule étant **caractérisé en ce que**
les moyens de fixation
comportent au moins une patte d'encliquetage (153) adaptée à s'engager au travers dudit orifice (142A) de façon à s'accrocher audit élément de blocage (140), et
**en ce que** l'organe de coupure (200) est situé sous ledit siège (100), de façon à n'être accessible que lorsque le capot (150) est démonté de l'ossature (121) de l'assise (120) du siège (100).

2. Véhicule automobile selon la revendication précédente, dans lequel ladite patte d'encliquetage (153) présente un retour (153A) qui s'accroche au bord dudit orifice (142A) par une face qui est orthogonale à l'axe d'insertion de la patte d'encliquetage (153) au travers dudit orifice (142A), à 10 degrés près.

3. Véhicule automobile selon l'une des revendications précédentes, dans lequel la paroi frontale (151) du capot (150) présente au moins une ouverture de passage (155) pour un outil (300) de démontage du capot (150), qui débouche vers ladite patte d'encliquetage (153).

4. Véhicule automobile selon l'une des revendications précédentes, dans lequel le capot (150) comporte deux pattes d'encliquetage (153) réparties selon un premier axe (A1), et au moins un crochet (154) qui est situé à distance dudit premier axe (A1) et qui est adapté à coopérer avec l'ossature de façon à former une charnière pour le capot (150).

5. Véhicule automobile selon l'une des revendications précédentes, dans lequel ledit élément de blocage (140) comporte une tige (141) qui est fixée par ses deux extrémités au reste de l'ossature (121) de l'assise (120) et au moins une plaquette (142) qui délimite ledit orifice (142A) et qui est fixée à ladite tige (141).

6. Véhicule automobile selon les deux revendications précédentes, dans lequel ladite tige (141) est pliée de façon à former au moins un décroché en U dont le fond (145) est adapté à coopérer avec le crochet (154) pour former ladite charnière.

7. Véhicule automobile selon l'une des revendications précédentes, dans lequel l'ossature (121) de l'assise (120) comporte des rails mobiles (124) adaptés à coulisser dans des rails fixes (131), des moyens de blocage du coulissement des rails mobiles (124) dans les rails fixes (131), et un moyen de manœuvre (160) manuelle adapté à manœuvrer les moyens de blocage pour libérer le coulissement des rails mobiles (124) dans les rails fixes (131), et dans lequel la paroi frontale (151) du capot (150) comporte au moins une encoche (156) pour le passage du moyen de manœuvre (160).

8. Véhicule automobile selon l'une des revendications précédentes, dans lequel la housse (125) de l'assise (120) présente une face supérieure (127) d'accueil de plusieurs passagers, une face arrière située du côté du dossier (110), et une face avant (128) opposée, et dans lequel l'encoche (126) est située en creux dans le bord inférieur de la face avant (128) de la housse (125), au milieu de ce bord inférieur, et s'étend sur une partie seulement de l'épaisseur de l'assise (120).

9. Véhicule automobile selon l'une des revendications précédentes, dans lequel le capot (150) est moulé en matière plastique.

## Patentansprüche

1. Kraftfahrzeug, aufweisend einen Elektrotriebmotor, der von einer Akkumulatorenbatterie über ein Stromnetz mit Strom versorgt wird, das ein Absperrorgan (200) aufweist, das dazu ausgeführt ist, die Akkumulatorenbatterie vom Elektromotor elektrisch zu isolieren,
wobei das Fahrzeug einen Sitz (100) aufweist, der Folgendes aufweist:
- eine Rückenlehne (110),
- eine Sitzfläche (120), die ein Gerippe (121) umfasst, das mit einem Bezug (125) überzogen ist, in dem ein Einschnitt (126) vorgesehen ist, und das ein Sperrelement (140) aufweist, das mindestens eine Öffnung (142A) begrenzt, und
- eine Haube (150), die eine Vorderwand (151), die zum Verschließen des Einschnitts (126) ausgeführt ist, und Befestigungsmittel (152) umfasst, die dazu ausgeführt sind, sich an der Sitzfläche (120) zu befestigen, wobei das Fahrzeug **dadurch gekennzeichnet ist, dass**
die Befestigungsmittel mindestens eine Einrastlasche (153) aufweisen, die für den Eingriff durch die Öffnung (142A) ausgeführt ist, um sich an dem Sperrelement (140) einzuhängen, und
dass das Absperrorgan (200) unter dem Sitz (100) angeordnet ist, so dass es nur zugänglich ist, wenn die Haube (150) von dem Gerippe (121) der Sitzfläche (120) des Sitzes (100) abmontiert ist.

2. Kraftfahrzeug nach dem vorhergehenden Anspruch, wobei die Einrastlasche (153) einen Rücksprung (153A) aufweist, der sich am Rand der Öffnung (142A) mit einer Fläche einhängt, die orthogonal zu der Einführachse der Einrastlasche (153) durch die Öffnung (142A) bei nahezu 10 Grad verläuft.

3. Kraftfahrzeug nach einem der vorhergehenden Ansprüche, wobei die Vorderwand (151) der Haube (150) mindestens eine zu der Einrastlasche (153) hin mündende Öffnung (155) für den Durchgang eines Werkzeugs (300) zum Abmontieren der Haube (150) aufweist.

4. Kraftfahrzeug nach einem der vorhergehenden Ansprüche, wobei die Haube (150) zwei Einrastlaschen (153), die entlang einer ersten Achse (A1) verteilt sind, und mindestens einen Haken (154) aufweist, der von der ersten Achse (A1) beabstandet und dazu ausgeführt ist, mit dem Gerippe zum Bilden eines Scharniers für die Haube (150) zusammenzuwirken.

5. Kraftfahrzeug nach einem der vorhergehenden Ansprüche, wobei das Sperrelement (140) eine Stange (141), die mit ihren beiden Enden an dem restlichen Gerippe (121) der Sitzfläche (120) befestigt ist, und mindestens ein Plättchen (142) aufweist, die die Öffnung (142A) begrenzt und die an der Stange (141) befestigt ist.

6. Kraftfahrzeug nach den beiden vorhergehenden Ansprüchen, wobei die Stange (141) zum Bilden mindestens einer U-förmigen Einbuchtung gekrümmt ist, deren Boden (145) zum Zusammenwirken mit dem Haken (154) ausgeführt ist, um das Scharnier zu bilden.

7. Kraftfahrzeug nach einem der vorhergehenden Ansprüche, wobei das Gerippe (121) der Sitzfläche (120) bewegliche Schienen (124), die zum Gleiten in feststehenden Schienen (131) ausgeführt sind, Mittel zum Sperren des Gleitens der beweglichen Schienen (124) in den feststehenden Schienen (131) und ein Mittel (160) zur manuellen Betätigung aufweist, das dazu ausgeführt ist, die Sperrmittel zu betätigen, damit die beweglichen Schienen (124) in den feststehenden Schienen (131) gleiten können, und wobei die Vorderwand (151) der Haube (150) mindestens einen Einschnitt (156) für den Durchgang des Betätigungsmittels (160) aufweist.

8. Kraftfahrzeug nach einem der vorhergehenden Ansprüche, wobei der Bezug (125) der Sitzfläche (120) eine obere Fläche (127), auf der mehrere Fahrgäste sitzen können, eine hintere Fläche, die an der Seite der Rückenlehne (110) angeordnet ist, und eine gegenüberliegende vordere Fläche (128) aufweist und wobei der Einschnitt (126) vertieft im unteren Rand der vorderen Fläche (128) des Bezugs (125) in der Mitte dieses unteren Rands angeordnet ist und sich lediglich über einen Teil der Dicke der Sitzfläche (120) erstreckt.

9. Kraftfahrzeug nach einem der vorhergehenden Ansprüche, wobei die Haube (150) aus Kunststoff geformt ist.

## Claims

1. Motor vehicle comprising a traction electric motor, supplied with current by an accumulator battery via an electrical network which comprises a switching member (200) suitable for electrically isolating the accumulator battery from the electric motor,
the vehicle comprising a car seat (100) comprising:
- a backrest (110),
- a seat (120) which comprises a framework (121) which is covered by a seat cover (125) in which there is provided a notch (126) and which comprises a blocking element (140) which delimits at least one orifice (142A), and
- a cover (150) comprising a front-end wall (151) designed to close said notch (126) and fixing means (152) which are designed to be fixed to the seat (120), the vehicle being **characterized in that** the fixing means comprise at least one snap-fitting lug (153) designed for being engaged through said orifice (142A) so as to be attached to said blocking element (140), and
**in that** the switching member (200) is situated under said car seat (100), so as to be accessible only when the cover (150) is removed from the framework (121) of the seat (120) of the car seat (100) .

2. Motor vehicle according to the preceding claim, wherein said snap-fitting lug (153) has a return (153A) which is attached to the edge of said orifice (142A) by a face which is orthogonal to the axis of insertion of the snap-fitting lug (153) through said orifice (142A), to within 10 degrees.

3. Motor vehicle according to either of the preceding claims, wherein the front-end wall (151) of the cover (150) has at least one through-opening (155) for a tool (300) for removing the cover (150), which emerges towards said snap-fitting lug (153).

4. Motor vehicle according to one of the preceding claims, wherein the cover (150) comprises two snap-fitting lugs (153) distributed along a first axis (A1), and at least one hook (154) which is situated at a distance from said first axis (A1) and which is designed to cooperate with the framework so as to form a hinge for the cover (150).

5. Motor vehicle according to one of the preceding claims, wherein said blocking element (140) comprises a rod (141) which is fixed by its two ends to the rest of the framework (121) of the seat (120) and at least one tab (142) which delimits said orifice (142A) and which is fixed to said rod (141).

6. Motor vehicle according to the two preceding claims, wherein said rod (141) is folded so as to form at least one U-shaped notch whose bottom (145) is designed to cooperate with the hook (154) to form said hinge.

7. Motor vehicle according to one of the preceding claims, wherein said framework (121) of the seat (120) comprises movable rails (124) designed to slide in fixed rails (131), means for blocking the sliding of the movable rails (124) in the fixed rails (131), and a manual manoeuvring means (160) designed to manoeuvre the blocking means to free the sliding of the movable rails (124) in the fixed rails (131), and wherein the front-end wall (151) of the cover (150) comprises at least one notch (156) for the passage of the manoeuvring means (160) .

8. Motor vehicle according to one of the preceding claims, wherein the seat cover (125) of the seat (120) has a top face (127) accommodating several passengers, a rear face situated on the side of the backrest (110), and an opposite front face (128), and wherein the notch (126) is situated hollowed out in the bottom edge of the front face (128) of the seat cover (125), in the middle of this bottom edge, and extends over only a part of the thickness of the seat (120).

9. Motor vehicle according to one of the preceding claims, wherein the cover (150) is moulded in plastic material.
